# EUROPÄISCHE PATENTANMELDUNG

(11) **EP 1 191 309 A2**
(43) Veröffentlichungstag der Anmeldung: **27.03.2002**
(21) Anmeldenummer: 01117823.3
(22) Anmeldetag: 21.07.2001
(51) Int. Cl.: G01D 7/00

(54) **Verfahren und Vorrichtung zum Anzeigen und/oder Ändern von Parametern**

(30) Priorität: 25.09.2000 DE 10047321
(71) Anmelder: Vega Grieshaber KG, 77709 Wolfach (DE)
(72) Erfinder: Rauer, Winfried, 77716 Fischerbach (DE); Laun, Robert, 77756 Hausach (DE)
(74) Vertreter: Patentanwälte Westphal, Mussgnug & Partner

(57) **Zusammenfassung**

Um die Anzeige und Änderung von Parametern einer Messvorrichtung zu vereinfachen und für unterschiedliche Messvorrichtungen zu vereinheitlichen, wird vorgeschlagen, zusätzlich zu den Parameterwerten Darstellungsdaten, die die Darstellung der Parameterwerte an dem Bediengerät (5) definieren, von einem Speicher der Messvorrichtung an das Bediengerät zu übertragen. Zum Anzeigen und gegebenenfalls Ändern der Parameterwerte wird am Bediengerät (5) ein Internet-Browser, ein Textverarbeitungsprogramm oder ein Spreadsheetprogramm eingesetzt; die Darstellungsdaten sind an der Messvorrichtung in einer Datei eines an das verwendete Programm angepassten Formats gespeichert.

## Beschreibung

Die Erfindung betrifft das Gebiet der Konfiguration von Messvorrichtungen mit Hilfe eines von der Messvorrichtung getrennten Bediengerätes. Sie betrifft genauer gesagt ein Verfahren zum Anzeigen von Parametern, die die Arbeitsweise der Messvorrichtung definieren, auf einem Anzeigefeld eines Bediengerätes, bei dem an der Messvorrichtung gespeicherte Werte der Parameter an das Bediengerät übertragen und gegebenenfalls von einem Benutzer geänderte Werte der Parameter von dem Bediengerät an die Messvorrichtung zurück übertragen werden.

Moderne Messgeräte und/oder -systeme, insbesondere solche, in denen eine elektronische Verarbeitung von-Messsignalen stattfindet, besitzen meist eine Möglichkeit, für die Arbeitsweise der Messvorrichtung bzw. des Systems relevante Parameter an einem separaten Bediengerät, insbesondere einem PC, anzuzeigen und gegebenenfalls neue Werte der Parameter einzustellen. Dazu wird auf dem Bediengerät ein Programm installiert, das über eine Schnittstelle mit der Messvorrichtung kommuniziert. Diese Bedienprogramme sind meist für den Hersteller der Messvorrichtung spezifisch und/oder nur für einen bestimmten Typ von Messvorrichtung brauchbar. Dies bringt für den Anwender eine Reihe von Nachteilen mit sich:
- Ein Anwender, der Messvorrichtungen unterschiedlicher Art und Herkunft parametrieren soll, muss den Umgang mit einer Vielzahl von Bedienprogrammen beherrschen, deren logischer Aufbau und Erscheinungsbild von einem Hersteller zum anderen und häufig auch für verschiedene Messgeräte eines Herstellers stark variiert und daher für den Anwender unübersichtlich ist.
- Die Notwendigkeit, mit einem Bediengerät eine Mehrzahl von Messvorrichtungen zu parametrieren, führt dazu, dass eine Vielzahl von Bedienprogrammen auf dem Bediengerät installiert sein muss. Der Installationsvorgang ist zeitaufwendig. Außerdem sind viele Benutzer abgeneigt, auf einem sicher funktionierenden PC neue Programme zu installieren, aus der Befürchtung, dass diese die Stabilität des PCs beeinträchtigen könnten. Weiterhin belegt die Vielzahl der Programme erheblichen Speicherplatz.
- Wenn die Funktionalität des Bedienprogramms erweitert wird, etwa durch Hinzufügen eines Parameters, so muss das Bedienprogramm angepasst oder erneuert werden. Auch wenn eine neue Version der Messvorrichtung mit geändertem inneren Aufbau auf den Markt gebracht wird, ist zu ihrer korrekten Steuerung häufig eine angepasste Version des Bedienprogramms erforderlich. Dies verursacht beim Hersteller der Messvorrichtung einen nicht unerheblichen Aufwand, weil aktualisierte Versionen von Bedienprogrammen nicht nur für die jeweils aktuell vermarktete Version einer Messvorrichtung zur Verfügung gestellt werden müssen, sondern auch für ältere Versionen. Entsprechend ergibt sich für den Benutzer der Messvorrichtungen das Problem, dass er genau darauf achten muss, die jeweils zu seiner Vorrichtung passende Version eines aktualisierten Bedienprogramms zu erhalten, um nicht durch Installieren eines falschen Programms die Funktionsfähigkeit zu gefährden.

Aufgabe der Erfindung ist, ein Verfahren der eingangs genannten Art und eine zur Durchführung des Verfahrens geeignete Messvorrichtung anzugeben, die es erlauben, die oben genannten Probleme zu beheben oder zumindest zu lindern.

Um den Installationsaufwand und den Speicherverbrauch am Bediengerät zu beschränken, wird erfindungsgemäß vorgeschlagen, von der Messvorrichtung zum Bediengerät zusätzlich zu den anzuzeigenden Parameterwerten auch Darstellungsdaten zu übertragen, die die Form der Darstellung der Parameterwerte auf dem Anzeigefeld definieren. In einem solchen Fall genügt zum Anzeigen der Parameter sowie gegebenenfalls zum Editieren von Änderungen der Parameterwerte am Bediengerät ein Programm, das für eine Vielzahl von Messvorrichtungen einheitlich sein kann, und das insbesondere unabhängig ist von Bedeutung und Anzahl der betrachteten Parameter, da diesbezügliche Information von der Messvorrichtung zur Verfügung gestellt wird und somit nicht mehr im Code des Bedienprogramms enthalten sein muss.

Um die an das Bediengerät zu übertragende Datenmenge zu begrenzen, ist es wünschenswert, dass Teile der Darstellungsdaten, vorzugsweise Daten, die für eine größere Zahl von Messvorrichtungen gleich sind, im Bedienprogramm enthalten sind so dass nur gerätespezifisch oder geänderte Darstellungsdaten übertragen werden müssen. Ist auf dem Bediengerät kein Anzeigeprogramm vorhanden, kann dieses vor der Anzeige der Parameterwerte von der Messvorrichtung auf das Bediengerät übertragen werden.

Diese Datenmengen werden zweckmäßigerweise in einem von dem Bediengerät unabhängigen Format an dieses übertragen, um die Anzeige der Parameter insbesondere auf Computern mit nicht notwendigerweise miteinander kompatiblen Architekturen zu ermöglichen, ohne dass dies für den Hersteller der Messvorrichtung erforderlich macht, dass unterschiedliche Bedienprogramme für die verschiedenen Computersysteme zur Verfügung gestellt werden müssen.

Bevorzugtes Beispiel für derartige Anweisungen sind HTML- oder XML-Code, JAVA-Anweisungen oder Perl, Java-Script, TCL oder VB-Script.

Die Verwendung einer Telefon- und Internet-Verbindung für die Übertragung der Parameter und der Darstellungsdaten erlaubt die Verwendung von weitverbreiteten, preiswerten und gut ausgetesteten Schnittstellen für die Kommunikation zwischen Messvorrichtung und Bediengerät.

Gemäß einer besonders bevorzugten Ausgestaltung des Verfahrens wird zum Anzeigen der Parameterwerte bzw. zum Verarbeiten der Darstellungsdaten ein Internet-Browser, ein Textverarbeitungsprogramm oder ein Spreadsheetprogramm eingesetzt. Die Parameter und ihre Darstellungsdaten können in einem solchen Fall in Gestalt einer Internet-Seite oder einer Datei in dem für das Textverarbeitungsprogramm bzw. das Spreadsheetprogramm spezifischen Format gespeichert sein.

Eine Übertragung auf drahtlosem Wege erlaubt einen bequemen Zugriff auf Parameter einer Messvorrichtung, die sich an einer beliebigen, schwer zugänglichen Stelle, z. B. in einer Produktionsstrecke, befinden kann.

Bevorzugtermaßen wird das Verfahren nicht nur zum Anzeigen, sondern auch zum Verändern der Parameter eingesetzt, indem das Bediengerät von einem Benutzer gewählte neue Werte der Parameter empfängt und diese an die Messvorrichtung überträgt.

Eine Vorrichtung zur Durchführung des oben angegebenen Verfahrens ist gekennzeichnet durch einen Speicher für die Darstellungsdaten. Die dort gespeicherten Darstellungsdaten enthalten wenigstens einen der folgenden Typen von Informationen:
- auf dem Anzeigefeld des Bediengerätes anzuzeigende Anzeige- und/oder Eingabemasken für Parameter;
- Bilder zur Darstellung von auf die Messvorrichtung bezogene Informationen, z. B. auf Funktionen oder Funktionsgruppen der Messvorrichtung bezogene Icons oder Darstellungen der Messvorrichtung oder von Teilen davon, die einen von einem gegebenen Parameter beeinflussten Bereich der Messvorrichtung oder die Auswirkungen einer Änderung des Parameters zeigen;
- Hilfsinformationen zum Gebrauch der Messvorrichtung, z. B. in Gestalt einer auf dem Anzeigefeld anzeigbaren Gebrauchsanweisung.

Die Messvorrichtung umfasst vorzugsweise einen Schnittstellenwandler und wenigstens ein mit dem Schnittstellenwandler kommunizierendes Messgerät, wobei der Schnittstellenwandler zur Übertragung der Parameterwerte und der Darstellungsdaten an das Bediengerät dient. Dabei ist vorzugsweise wenigstens ein Teil des Speichers für die Darstellungsdaten dem Schnittstellenwandler zugeordnet. Ist am Messgerät keine PC-Standardschnittstelle wie z. B. RS232 oder USB vorhanden, wird die Messvorrichtung vorzugsweise um einen Schnittstellenwandler erweitert, der eine Anpassung von der physikalischen Schnittstelle und/oder des Übertragungsprotokolls des Messgerätes auf eine PC-Standardschnittstelle vornimmt. Dabei kann wenigstens ein Teil des Speichers für die Darstellungsdaten dem Schnittstellenwandler zugeordnet werden. Eine vollständige Speicherung der Darstellungsdaten am Schnittstellenwandler ist insbesondere dann zweckmäßig, wenn eine bereits existierende Messvorrichtung durch Hinzufügung eines angepassten Schnittstellenwandlers für die Anwendung des erfindungsgemäßen Verfahrens geeignet gemacht werden soll. Eine teilweise Speicherung der Darstellungsdaten am Schnittstellenwandler ist insbesondere bei einer mehrere Messgeräte umfassenden Messvorrichtung zweckmäßig, um dort solche Teile der Darstellungsdaten zu speichern, die nicht für ein einziges Messgerät spezifisch sind, sondern zur Darstellung und gegebenenfalls Änderung der Parameter von mehreren Messgeraten brauchbar sind. Für die einzelnen Messgeräte der Messvorrichtung jeweils spezifische Daten sind vorzugsweise in einem jedem Messgerät zugeordneten, eigenen Speicher gespeichert.

Bei mehreren am Schnittstellenwandler angeschlossenen Geräten kann über die im Schnittstellenwandler gespeicherten Darstellungsdaten eine Auswahl erfolgen, welches angeschlossene Gerät parametriert werden soll. Dabei kann insbesondere der dem Messgerät zugeordnete Speicher Textdaten mit Erläuterungen zum Gebrauch des Messgeräts enthalten.

Weitere Merkmale und Vorteile der Erfindung ergeben sich aus der nachfolgenden Beschreibung eines Ausführungsbeispiels mit Bezug auf die beigefügte Figur, die in stark schematisierter Form eine erfindungsgemäße Messvorrichtung und ein daran angeschlossenes Bediengerät zeigt.

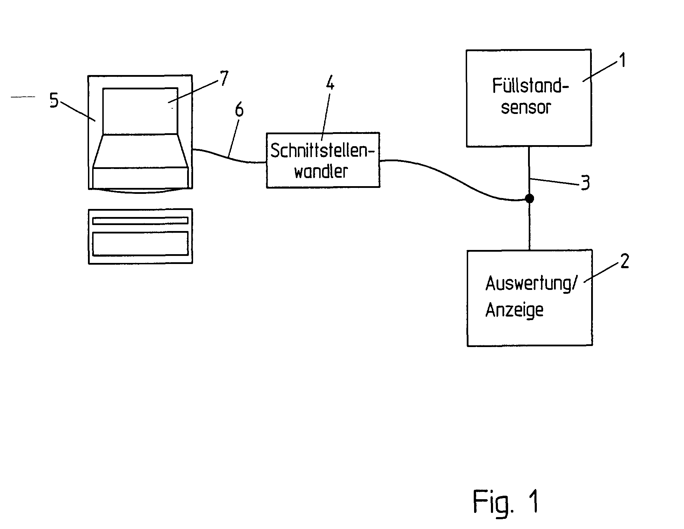

Die in Figur 1 als Beispiel gezeigte Messvorrichtung umfasst als Messgerät einen Füllstandsensor 1, der zur Überwachung des Inhalts an einem Behälter für eine Flüssigkeit oder ein Schüttgut angeordnet ist. Das Füllstandsignal wird zur Auswertung an eine Auswerteeinheit, dies kann z. B. eine angeschlossene speicherprogrammierbare Steuerung sein, oder an eine Anzeigeeinheit 2 übertragen. Die Kommunikation zwischen der Auswerte- oder Anzeigeeinheit 2 und dem Messgerät 1 könnte z. B. über eine RS232-Schnittstelle, einen bekannten Feldbus wie z. B. Profibus (Profibus ist ein standardisiertes Feldbusprotokoll der Siemens AG) oder über eine andere bekannte Schnittstelle 3 erfolgen.

Ist am als Bediengerät 5 fungierenden Computer keine passende Schnittstelle vorhanden, wird ein Schnittstellenwandler 4 verwendet, der eine Umsetzung der auf dem Übertragungsweg 3 ausgetauschten Daten in ein für das Bediengerät 5 geeignetes Format vornimmt. Die Übertragungsstrecke 6 zwischen dem Schnittstellenwandler 4 und dem Computer 5 kann ein einfaches Kabel für die serielle Datenübertragung sein, sie kann aber auch eine Telefonverbindung und/oder zumindest abschnittweise eine drahtlose Verbindung umfassen, wobei die Umsetzung in ein für die drahtlose Übertragung bzw. die Übertragung auf eine Telefonverbindung geeignetes Format transparent durch (nicht gezeigte Modems) erfolgt.

Der Füllstandsensor 1 ist zusätzlich zu Speicherplätzen für die Werte seiner Parameter mit Speicherplatz für Daten ausgestattet, die die Darstellung der Parameterwerte auf dem Anzeigeschirm 7 des Computers 5 beschreiben. Diese Darstellungsinformation hat z. B. das Format einer Internet-Seite, d. h. zum Beispiel einer Datei im HTML-Format. Um die Werte der Parameter auf dem Schirm 7 zur Anzeige zu bringen, genügt es daher, wenn der Computer 5 mit einem Internet-Browser ausgestattet ist, der über den Schnittstellenwandler 4 eine Verbindung zum Füllstandsensor 1 aufbaut und von dort die aktuellen Parameterwerte sowie die zugehörigen Darstellungsdaten abfragt. Der Schnittstellenwandler 4 extrahiert die Parameterwerte und die Darstellungsinformation aus den Datenflüssen auf dem Feldbus 3 und leitet sie zur Anzeige an den Computer 5 weiter. Der dort eingesetzte Browser benötigt keinerlei "Kenntnisse" über die zu programmierende Vorrichtung, um anhand der extrahierten Darstellungsdaten eine dem Füllstandsensor 1 angepasste Anzeige- und Eingabemaske auf dem Bildschirm 7 anzuzeigen, gegebenenfalls neue Werte bestimmter ausgewählter Parameter vom Benutzer zu empfangen und an den Sensor 1 zurück zu übertragen. Da somit sämtliche zum Anzeigen und Editieren der Parameter benötigten Daten im Sensor 1 vorliegen, benötigt der Computer 5 kein speziell auf die Programmierung des Sensors 1 zugeschnittenes Programm mehr.

Zweckmäßigerweise sind in den Darstellungsdaten auch Textdaten enthalten, die den Gebrauch der Messvorrichtung bzw. ihre Parametrierung erläutern. Diese Textdaten können als Teil der Eingabemaske auf dem Bildschirm 7 dargestellt werden oder einem Benutzer auf die entsprechende Eingabe hin als allgemeiner oder kontextsensitiver Hilfetext angezeigt werden.

Um die Bedienung des Füllstandsensors 1 zu aktualisieren, genügt es bei dem System aus Figur 1, die Darstellungsdaten des Sensors 1 zu aktualisieren. Dies kann z. B. durch Austausch eines Speicherbausteins, etwa eines EPROMS, oder durch Überschreiben der Daten in einem elektrisch wiederbeschreibbaren Speicher, wie z. B. eines EEPROMs, erfolgen, in dem diese Darstellungsdaten im Sensor 1 gespeichert sind.

Selbstverständlich kann die Messvorrichtung außer dem Füllstandsensor 1 und seiner Steuerung 2 noch weitere Messgeräte enthalten, die ebenfalls an den Feldbus 3 angeschlossen sind und in der Figur nicht dargestellt sind. Jedem dieser Messgeräte ist ein Speicherelement zugeordnet, das zur Parametrierung des Messgeräts benötigte Darstellungsdaten enthält.

Wenn die Steuerung eines dieser Messgeräte geändert werden soll, so genügt es, die Darstellungsdaten im zugeordneten Speicher auszutauschen. Die Änderung beschränkt sich somit lediglich auf den einem Messgerät zugeordneten Speicher; es ist keine Aktualisierung eines vollständigen Meßprogramms erforderlich. Die Änderung kann z. B. durch Austauschen eines Speicherbausteins erfolgen, in dem die Darstellungsdaten gespeichert sind; es ist auch denkbar, die Darstellungsdaten jeweils von dem Computer 5 aus mit einer neuen Version zu überschreiben. Anders als bisher ist für eine solche Aktualisierung kein Austausch des Bedienprogrammes des Computers 5 erforderlich, es genügt eine Anpassung der Darstellungsdaten des von einer Änderung betroffenen Messgeräts.

Insbesondere dann, wenn die Übertragungsstrecke 6 eine Telefonverbindung oder eine sonstige über ein öffentliches Netz führende Etappe umfasst, besteht auch die Möglichkeit, dass der Hersteller des Messgeräts oder eine von ihm beauftragte Servicefirma mit Einverständnis des Anwenders die Aktualisierung der Darstellungsdaten per Fernwartung über das öffentliche Netz durchführt.

Um im Falle einer aus mehreren Messgeräten bestehenden Messvorrichtung eine gezielte Programmierung der Parameter eines Gerätes zu ermöglichen, ist dem Speicherbereich, der die Darstellungsdaten eines Messgerätes enthält, jeweils ein Name zugeordnet, anhand von dem der Computer 5 in der Lage ist, den betreffenden Speicherbereich zu adressieren.

Alternativ kann vorgesehen werden, dass auch der Schnittstellenwandler 4 ein Speicherelement aufweist in dem eine Maske zum Auswählen zwischen den verschiedenen Messgeräten gespeichert ist. Diese Maske ist wie die Darstellungsinformationen der Geräte selbst eine HTML-Datei.

Anstelle eines Internet-Browsers kann auch ein Spreadsheet- oder Textverarbeitungsprogramm zum Darstellen einer editierbaren Maske mit den Parameterwerten der Messvorrichtung zum Einsatz kommen, da auch solche Programme von einem Hersteller häufig für eine Vielzahl von Computerplattformen auf den Markt gebracht werden und durch Überschreiben und Speichern von Zellen oder Textpassagen eine bequeme Möglichkeit zum Ändern von angezeigten Parameterwerten bieten.

## Patentansprüche

1. Verfahren zum Anzeigen von Parametern einer Messvorrichtung (1) auf einem Anzeigefeld (7) eines Bediengeräts (5), bei dem an der Messvorrichtung gespeicherte Werte der Parameter an das Bediengerät (5) übertragen werden, **dadurch gekennzeichnet, dass** zusätzlich zu den Parameterwerten Darstellungsdaten an das Bediengerät (5) übertragen werden, die die Form der Darstellung der Parameterwerte auf dem Anzeigefeld (7) definieren.

2. Verfahren nach Anspruch 1, **dadurch gekennzeichnet, dass** die Darstellungsdaten von dem Bediengerät (5) auszuführende Anweisungen umfassen.

3. Verfahren nach Anspruch 2, **dadurch gekennzeichnet, dass** die Anweisungen in einem von dem Bediengerät (5) unabhängigen Format an das Bediengerät übertragen werden.

4. Verfahren nach Anspruch 3, **dadurch gekennzeichnet, dass** die Anweisungen HTML- oder XML-Code oder JAVA-Anweisungen umfassen.

5. Verfahren nach einem der vorhergehenden Ansprüche, **dadurch gekennzeichnet, dass** die Übertragung mit Hilfe einer Telefon- oder Internet-Verbindung erfolgt.

6. Verfahren nach einem der vorhergehenden Ansprüche, **dadurch gekennzeichnet, dass** zum Anzeigen der Parameterwerte am Bediengerät (5) ein Internet-Browser, ein Textverarbeitungsprogramm oder ein Spreadsheet-Programm eingesetzt wird.

7. Verfahren nach einem der vorhergehenden Ansprüche, **dadurch gekennzeichnet, dass** die Übertragung drahtlos erfolgt.

8. Verfahren nach einem der vorhergehenden Ansprüche, **dadurch gekennzeichnet, dass** das Bediengerät (5) von einem Benutzer gewählte neue Werte von Parametern empfängt und an die Messvorrichtung (1) überträgt.

9. Messvorrichtung (1) zur Durchführung des Verfahrens nach einem der vorhergehenden Ansprüche, **gekennzeichnet durch** einen Speicher für die Darstellungsdaten.

10. Messvorrichtung nach Anspruch 9, **dadurch gekennzeichnet, dass** die Darstellungsdaten wenigstens einen der folgenden Typen von Information enthalten:
- Anzeige- und/oder Eingabemasken für Parameter,
- Bilder zur Darstellung von auf die Messvorrichtung bezogenen Informationen,
- Hilfsinformationen zum Gebrauch der Messvorrichtung.

11. Messvorrichtung nach Anspruch 9 oder 10, **dadurch gekennzeichnet, dass** sie einen Schnittstellenwandler (4) und wenigstens ein mit dem Schnittstellenwandler (4) kommunizierendes Messgerät umfasst, wobei der Schnittstellenwandler (4) zur Übertragung der Parameterwerte und der Darstellungsdaten an das Bediengerät (5) dient.

12. Messvorrichtung nach Anspruch 11, **dadurch gekennzeichnet, dass** wenigstens ein Teil des Speichers für die Darstellungsdaten dem Schnittstellenwandler zugeordnet ist

13. Messvorrichtung nach einem der Ansprüche 9 bis 12, **dadurch gekennzeichnet, dass** ein dem Messgerät zugeordneter Speicher Textdaten mit Erläuterungen zum Gebrauch des Messgeräts enthält.

14. Messvorrichtung nach Anspruch 12, **dadurch gekennzeichnet, dass** durch die vom Schnittstellenwandler (4) übertragenen Darstellungsdaten oder Anweisungen eine Auswahl des zu parametrierenden Geräts erfolgt.

15. Messvorrichtung nach Anspruch 11, **dadurch gekennzeichnet, dass** der Schnittstellenwandler (4) an einen gängigen Feldbus angeschlossen ist.
